# EUROPEAN PATENT SPECIFICATION

(11) **EP 4 117 574 B1**
(45) Date of publication and mention of the grant of the patent: **27.08.2025**
(21) Application number: 21713097.0
(22) Date of filing: 12.03.2021
(51) Int. Cl.: A61C 13/01, A61C 13/10, A61C 13/103, A61C 13/08, A61C 13/087

(54) **PROSTHETIC TOOTH FOR DENTURE BASE**
PROTHESENZAHN FÜR PROTHESENBASIS
DENT PROTHÉTIQUE POUR BASE DE DENTIER

(30) Priority: 13.03.2020 GB 202003655
(43) Date of publication of application: 18.01.2023
(73) Proprietor: Davis, Schottlander & Davis Ltd, Letchworth Garden City Hertfordshire SG6 2WD (GB)
(72) Inventor: SCHOTTLANDER, Brian, Garden City Hertfordshire SG6 2WD (GB)
(74) Representative: Lock, Graham James
(86) International application number: PCT/GB2021/050629
(87) International publication number: WO 2021/181114

(56) References cited:
- WO-A1-2020/168044
- DE-A1- 102017 113 814

## Description

### FIELD OF THE INVENTION

The present invention relates to one or more new teeth for production of a denture as well as a denture comprising the teeth. In addition the description presents a denture base for production of a denture as well as a denture comprising the denture base. The teeth of the invention have projections for spacing teeth from a denture base during bonding of the teeth to the denture base thereby ensuring that a substantially uniform layer of sufficient adhesive of specific thickness is applied, thereby improving strength of a bond between the denture base and the teeth.

### BACKGROUND OF THE INVENTION

Dentures are prosthetic devices constructed to replace missing teeth. Complete dentures replace all of the teeth in the upper and/or the lower jaw, whereas partial dentures only replace some of the teeth in the jaw concerned. For example, partial dentures may replace one or more front teeth and/or one or more of the posterior teeth. Generally, they are supported by the surrounding soft and hard tissues of the oral cavity. Complete dentures can also be implant supported, whereby the denture attaches to one or more dental implants fitted into the alveolar bone of the mandible or maxilla (lower or upper jaw). Conventional dentures are removable as and when required.

In natural human dentition, the tooth distribution in each quadrant of the mouth consists of three front teeth, and four or five posterior teeth including two pre-molars and two or three molars. When constructing a complete denture, either three or more typically four posterior teeth are used in each quadrant. When constructing a partial denture, the number of teeth used depends on factors such as the number of remaining natural teeth and the space available. The third molar tooth is not always present in the natural human dentition, and is not usually included in dentures.

Dentures should be retentive, comfortable and provide support for the cheeks and lips. They should allow effective mastication, acceptable aesthetics, clear phonetics, and contribute to the wearer's confidence and self-esteem.

The construction of complete dentures involves a number of clinical and laboratory stages.

In traditional denture construction, impressions of one or both jaws are first taken by the clinician. These are commonly referred to as primary impressions.

Into these impressions, technicians at a dental laboratory pour a material, such as plaster, to form a model representing the shape and contours of the soft and hard tissue area of the jaws concerned as well as any remaining natural teeth. Once solidified, this forms a model of the upper and/or lower jaws of the individual patient. The dental technician may make custom made special trays with which the clinician takes secondary impressions for greater accuracy and if so the dental technician will pour second models. Alternatively the models in either case may be made by digital means including 3D printing.

The dental technician then constructs on the models of the upper and lower jaw a bite rim/block out of wax, positioned to replicate the position of the missing teeth and including the extant teeth. These are made of solid wax with the extant teeth in the plaster to approximate or record approximately the correct dimensions but without any anatomical modelling. They are then sent to the clinician to make various adjustments so as to give information to the technician about facial height, anterior tooth position, lip support, occlusal plane etc., and to mark various anatomical landmarks. These are then returned to the dental laboratory, where the dental technician mounts the models and bite rims on an articulator (an articulator is a hinged metal piece of equipment used to represent the movements of the jaws in the dental laboratory) together with a model of the teeth in the opposing arch if these are still extant.

The dental technician then models in wax the plate that will form the denture itself and teeth are added to it in the functionally and aesthetically correct positions. This wax model with teeth is referred to as a denture try-in. The clinician checks the try-in in the patient's mouth against either the denture or the try-in of the opposing arch or the existing teeth in the opposing arch, with regard to the appearance, phonetics, and function. Adjustments are made by the clinician where necessary.

Once the try-in has been returned to the dental laboratory, the dental technician then finishes any modelling work on the try-in that may be needed in order to get a true representation of the finished denture. The technician then takes the wax denture with teeth attached and invests it into plaster contained in a metal flask, taking care to put a separator film between the two halves of the flask in order that it may be opened when set. Once set, the dental technician opens the two halves of the flask and, using boiling water, removes the wax from the flask leaving the teeth embedded into one half. The teeth remain in the flask where they are held in position by the plaster and there is hollow space corresponding to where the wax has been removed. An acrylate dough is then packed into the hollow space in the flask, and it is closed tight in a conventional manner and heated to cure the acrylate dough forming the denture plate material. Once cured, the plaster is broken away and the denture is cleaned and polished before sending back to the clinician to fit into the patient's mouth.

In recent years, modern technology has been utilised so that one or more of the stages of the traditional denture production method is implemented digitally, in order to reduce the overall method time.

For example, once an impression of a patient's mouth or patient's jaw is taken, it can be scanned and recorded in a digital form for example on a device such as a computer in the dental laboratory. In some cases, the impression may be scanned directly at the chairside and the data transmitted electronically to the dental laboratory. Alternatively, a model may be produced from this impression and may be scanned and recorded in a digital form for example on a device such as a computer either in the laboratory or directly at the chairside. The components of the denture are then positioned digitally, by inputting additional information including measurements of the anatomical features and dimensions of the patient's mouth into a device such as a computer, and using specialist software to design the denture electronically. Such a method avoids the laborious steps of physically setting up the teeth and also enables different occlusal schemes to the tried out virtually using the software.

The denture plate is then milled out of wax or other material, leaving space for precisely fitting teeth to be inserted into the wax to form the try-in. As an alternative, both the denture plate and teeth can be milled together out of wax or other material. This is then sent to a clinician for checking in the patient's mouth, following which the try-in can be invested into plaster contained in a metal flask, as in the traditional manner described above.

In an alternative shorter method, the step of producing and fitting a try-in is completely omitted. In either case the denture is produced directly from the digital design by milling the finished denture plate from prepolymerised plastic or 3D printing, leaving space for the individual teeth to be fixed in with an adhesive, such as an acrylic adhesive material. Alternatively, both the individual teeth themselves as well as the denture plate are produced by milling or 3D printing, and the teeth and base are fixed together using adhesive. As an alternative, both the denture plate and teeth can be milled together out of tooth coloured acrylic or 3D printed using tooth coloured material and the denture plate itself can be stained or painted pink.

In addition to the traditional methods of taking impressions of the contours of the mouth using impression material, methods have also been developed to take digital impressions of a patient's jaw, so that physical models are not even required. Together with these methods for taking impressions of the mouth additional information including recording the occlusal plane, the lip line, the position of the front teeth, other measurements of the anatomical features and dimensions of the patient's mouth must be input into the computer.

However the procedures to carry this out can be very laborious. For instance, Dentca Inc. in US8998615 claims a method of obtaining a gum impression of a patient's mouth and measuring jaw relations, a dental impression tray assembly including a lower tray and an upper tray to fabricate a denture, is used. The lower tray includes a first piece and a pair of second pieces and the upper tray includes a third piece and fourth piece. The method includes inserting the lower tray loaded with an impression material into the mouth to take an impression; taking out the lower tray from the mouth and cutting the impression material along a borderline between the first piece and the pair of second pieces; separating the first piece from the pair of second pieces; attaching an intra-oral tracer to the first piece and inserting the first piece, to which the intra-oral tracer is attached, and the third piece into the mouth to measure the jaw relations.

The try-in or finished denture may be designed and produced with the aid of computer design software as outlined in the steps above.

For any of the above methods which involve the separate production of the denture plate and teeth and adhesive bonding together of the components, the individual teeth need to be fixed into pre-milled or 3D printed spaces in the milled acrylic or 3D printed denture plate. This positioning of the teeth is susceptible to twisting and/or rotation within the spaces, so that the exact position of the individual teeth in the final denture may not be correct, leading to problems in terms of occlusion or appearance.

In addition, the step of securely bonding teeth together with a denture base can be difficult to achieve in practice because adhesive is placed in the space in the denture base and a tooth is inserted into the space, but the tooth displaces the adhesive so it is difficult to achieve a uniform thickness of adhesive.

DE102017113814A1 presents a method for manufacturing a denture. Prosthetic teeth are provided with protrusions to define a distance with the surface of the socket in the denture base and thus set a bonding gap for the glue.

Therefore, there remains a need for improved prosthetic teeth which can be accurately and more easily properly positioned in a denture, as well as a need for a more secure bond between the denture base and the teeth.

### SUMMARY

The object of the present invention is a prosthetic tooth as defined in claim 1. Also other objects of the invention are a set of teeth a defined in claim 10, a denture a defined in claim 13, a method for manufacturing a tooth as defined in claim 14 and a method for correctly positioning and bonding teeth in a denture as defined in claim 15.

In a first aspect, the invention provides a prosthetic tooth for a denture, wherein the tooth comprises a lingual or palatal surface, an opposing vestibular surface, opposing proximal surfaces, an incisal or occlusal surface and an opposing apical surface, wherein two, three or four projections extend from the apical and for the palatal or lingual surface of the tooth for spacing the surface adjacent to the projection from a denture base, wherein each projection extends 40µm to 500µm from the surface of the tooth.

Advantageously, by spacing the tooth from the denture base, adhesive is retained in the space between the tooth and the denture base.

Preferably,
the invention includes teeth having two or up to five, six, seven, eight, nine or ten or more projections.
Most preferably, each projection extends 120µm from the surface.

Preferably, each projection has a base adjoining the surface of a tooth or the surface of the denture base and the base of the projection has an area of 0.2mm² to 6mm².

Preferably, one or more projections are semi spherical, frusto spherical or are defined by the shape of a dome or spherical segment.

Alternatively, one or more projections are cylindrical. In this case, preferably, the end of the cylinder distant from the tooth is semi spherical, frusto spherical or is defined by the shape of a dome or spherical segment.

Alternatively, one or more projections are cuboid, or defined by a square or rectangular frusto pyramid.

In an embodiment, a plurality of projections having the same or different three dimensional shapes is provided. For example, one embodiment of the invention comprises a projection defined by a rectangular frusto pyramid and a plurality of projections defined by spherical segments. Preferably four projections defined by spherical segments are provided. Preferably, the projections defined by spherical segments are arranged around the projection defined by a rectangular frusto pyramid.

Preferably, each projection is spaced apart from adjacent projections so that, in use, adjacent to the projections, the surface of the tooth is uniformly or evenly spaced from the surface of a denture base.

One advantage of the invention is that a substantially uniform or even layer of sufficient adhesive of specific thickness can be applied between teeth and a denture base and the strength of a bond between the teeth and the denture base is improved.

In addition, advantageously, in addition to spacing a tooth from the denture base, the presence of one or more projections makes it easier to determine whether the tooth is positioned correctly when the tooth is aligned with a denture base.

In a second aspect, the description provides a denture base for a denture, wherein the denture base comprises a space having a surface for receiving a tooth, wherein at least one projection extends from a surface of the denture base for spacing the surface adjacent to the projection from the tooth.

In a third aspect, the invention provides a set of teeth comprising a plurality of teeth according to the invention.

Preferably, the set of teeth comprises one or more upper (maxillary) and / or lower (mandibular) teeth. Preferably, the set of teeth comprises one or more of central, lateral, cuspid, first bicuspid, second bicuspid, first molar and second molar teeth. Preferably, the set of teeth comprises anterior and /or posterior teeth. Preferably, the set of teeth comprises anterior, pre-molar and molar teeth. Preferably, the set of teeth comprises all of central, lateral, cuspid, first bicuspid, second bicuspid, first molar and second molar teeth.

In a further aspect, the invention provides a method for manufacturing a tooth of the invention which comprises the step of moulding a tooth having at least one projection extending from the surface of the tooth. Alternatively, the method comprises the steps of milling a tooth so that at least one projection extends from the surface of the tooth. Alternatively, the method comprises the steps of three dimensional printing a tooth having at least one projection extending from the surface of the tooth.

In a further aspect, the description provides a method for manufacturing a denture base which comprises the step of moulding a denture base having a surface for receiving a tooth and at least one projection extending from a surface of the denture base for spacing the surface adjacent to the projection from the tooth. Alternatively, the method comprises the steps of milling a denture base so that it has a surface for receiving a tooth and at least one projection extending from a surface of the denture base for spacing the surface adjacent to the projection from the tooth. Alternatively, the method comprises the steps of three dimensional printing a denture base having a surface for receiving a tooth and at least one projection extending from a surface of the denture base for spacing the surface adjacent to the projection from the tooth.

In a further aspect, the invention provides a denture comprising a denture base and one or more teeth of the invention.

In a further aspect, the invention provides a method for correctly positioning and bonding teeth in a denture which comprises (a) providing one or more teeth of the invention and a denture base and bonding the teeth with the denture base.

### BRIEF DESCRIPTION OF THE FIGURES

The invention will now be described with reference to the accompanying drawings, in which:
Figure 1 shows a view of an embodiment of a tooth of the invention. The tooth has a projection defined by a rectangular frusto pyramid and four projections defined by spherical segments for spacing the tooth from a denture base.
Figure 2 shows a further embodiment of a tooth of the invention. The tooth has a projection defined by a rectangular frusto pyramid and four projections defined by spherical segments for spacing the tooth from a denture base.
Figure 3 shows a further embodiment of a tooth of the invention. The tooth has a projection defined by a rectangular frusto pyramid and four projections defined by spherical segments for spacing the tooth from a denture base.
Figure 4 shows a further embodiment of a tooth of the invention. The tooth has a projection defined by a rectangular frusto pyramid and four projections defined by spherical segments for spacing the tooth from a denture base.
Figure 5 shows a further embodiment of a tooth of the invention. The tooth has three projections for spacing the tooth from a denture base.
Figure 6 shows a further embodiment of a tooth of the invention. The tooth has three projections for spacing the tooth from a denture base.
Figure 7 shows a plan view of an embodiment of a denture base.
Figure 8 shows a perspective view of an embodiment of the denture base shown in Figure 5.
Figure 9 shows a front perspective view of an embodiment of the denture base shown in Figures 7 and 8.
Figure 10 shows an outline in wax of the surfaces of six upper anterior teeth having no projections as described in the comparative tests carried out in the Examples.
Figure 11 shows three teeth having no projections placed onto one half of a denture base analogue and three teeth having projections placed on the other half as described in the comparative tests carried out in the Examples.
Figure 12 shows a matrix of the vestibular surfaces of six upper anterior teeth as described in the comparative tests carried out in the Examples.
Figure 13 shows a denture base analogue pressed onto teeth until initial set had taken place as described in the comparative tests carried out in the Examples.
Figure 14 shows the results of comparative experimental tests as described in the Examples. It can be seen that the presence of projections for spacing the teeth from the denture base resulted in the teeth being extensively broken within the teeth themselves, whereas in comparison, when no projections for spacing the teeth from the denture base were present, teeth broke away from the denture base at the bonding surfaces themselves.

### DETAILED DESCRIPTION

The following definitions shall apply throughout the specification and the appended claims. The singular forms "a," "an," and "the" include plural reference unless the context clearly dictates otherwise.

Within the context of the present specification, the term "comprises" is taken to mean "includes" or "contains", i.e. other integers or features may be present, whereas the term "consists of" is taken to mean "consists exclusively of".

Within the present specification, the term "about" means preferably plus or minus 20%; more preferably plus or minus 10%; even more preferably plus or minus 5%; most preferably plus or minus 2%.

Within the present specification, the term "denture" means a prosthetic device constructed to replace missing teeth; a denture consists of a denture base that is supported by the soft and hard tissues of the oral cavity, and artificial denture teeth that restore aesthetics and function for a patient.

Within the present specification, the term "projection" means an outwardly extending surface, for example a protuberance.

Within the present specification, the term "apical" refers to the direction towards the base or root(s) or apex(es) of a tooth (the apices), as opposed to coronal, which refers to the direction towards the crown of a tooth.

Within the present specification, the term "lingual" refers to the side of a tooth which in situ would be adjacent to (or the direction towards) the tongue, as opposed to vestibular which refers to the side of a tooth adjacent to (or the direction towards) the inside of the cheek or lips.

Within the present specification, the term "palatal" refers to the side of a tooth which in situ would be adjacent to (or the direction towards) the palate, as opposed to vestibular which refers to the side of a tooth adjacent to the inside of the cheek or lips.

Within the present specification, the term "vestibular" refers to the side of a tooth which in situ would be adjacent to (or the direction towards) the inside of the cheeks or lips, as opposed to lingual or palatal, which refer to the side of a tooth adjacent to (or the direction towards) the tongue or palate, respectively.

Within the present specification, the term "proximal" refers to the surfaces of teeth that which *in situ* would be adjacent to another tooth.

Within the present specification, the term "incisal surface" refers to the biting surface of the anterior teeth i.e. the teeth toward the front of the mouth.

Within the present specification, the term "occlusal surface" refers to biting surfaces of the posterior teeth i.e. the teeth towards the back of the mouth.

Unless defined otherwise, all technical and scientific terms used herein have the same meanings as commonly understood by one of ordinary skill in the art.

Embodiments have been described herein in a concise way. It should be appreciated that features of these embodiments may be variously separated or combined within the invention. In a method for production of a denture, each tooth of the denture is inserted into a previously manufactured socket in a denture base having adhesive therein or into which adhesive will be introduced. The adhesive flows around each tooth in the space between the tooth and the denture base and bonds each tooth to the denture base.

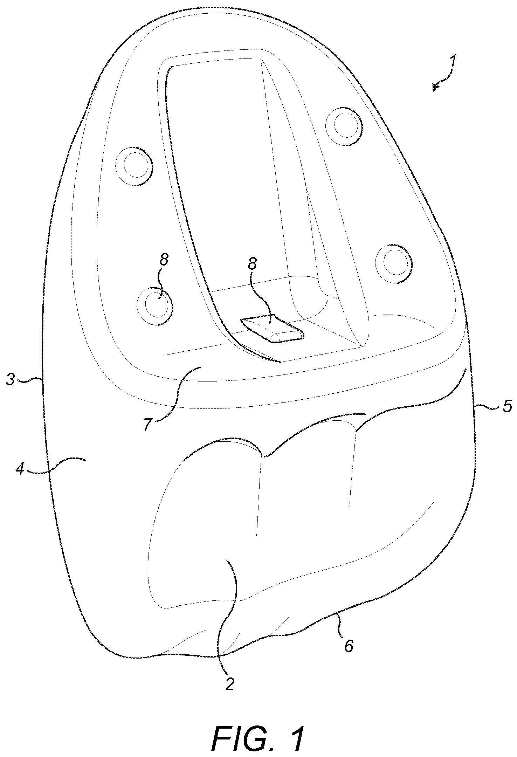

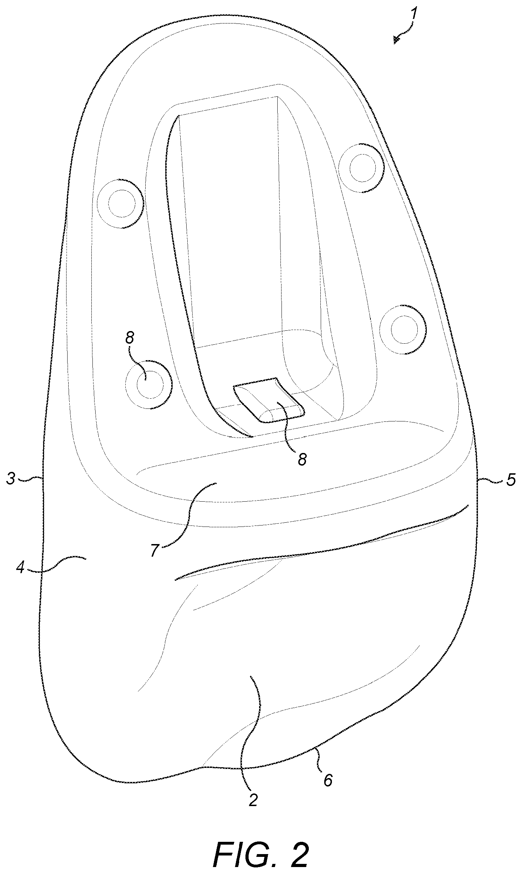

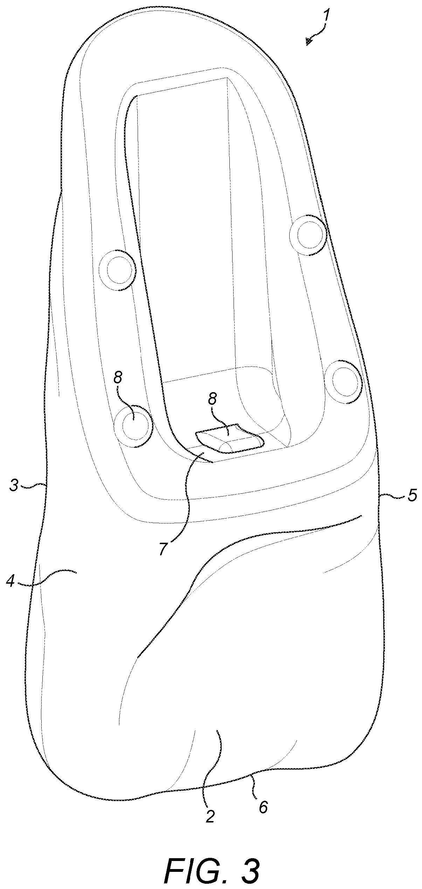

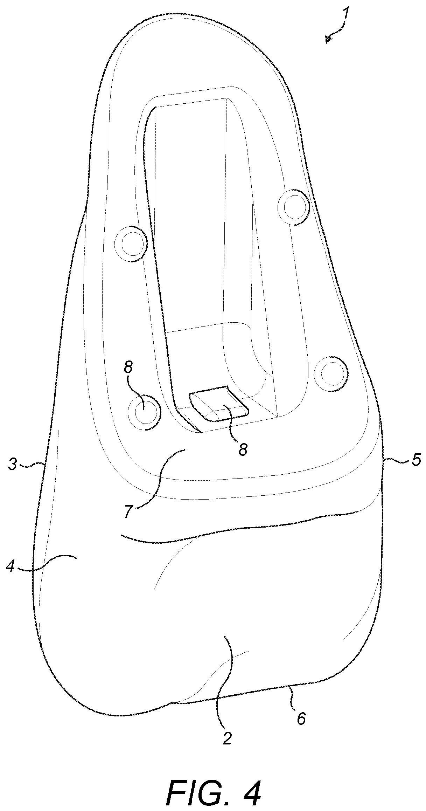

To assist in ensuring that sufficient adhesive is present between each tooth and the denture base, with reference to Figures 1 to 6, the invention provides a prosthetic tooth (1) wherein the tooth comprises a lingual or palatal surface (2), an opposing vestibular surface (3), opposing proximal surfaces (4,5), an incisal or occlusal surface (6) and an opposing apical surface (7), wherein a plurality of dome shaped or rectangular frustopyramid projections (8) extend from the surface of the tooth for spacing the surface (2,7) from a denture base (9).

The plurality of projections each extend 120µm from the apical surface of the tooth.

Preferably, each projection has a base adjoining the apical surface of a tooth and the base has an area of 0.2mm² to 6mm².

Each projection is spaced apart from adjacent projections so that, in use, the surface of the tooth adjacent to the projections is evenly spaced from the surface of a denture base.

The tooth (1) of the invention is manufactured by a method which includes the step of moulding the tooth (1) having one or more projections (8) extending therefrom. Alternatively, the method comprises the steps of milling the tooth (1) so that one or more projections (8) extend from the surface of the tooth (1). Alternatively, the method comprises the steps of three dimensional printing a tooth (1) having one or more projections extending from the surface of the tooth.

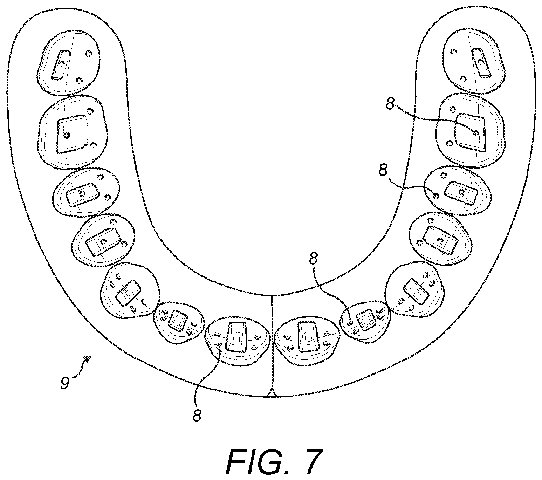

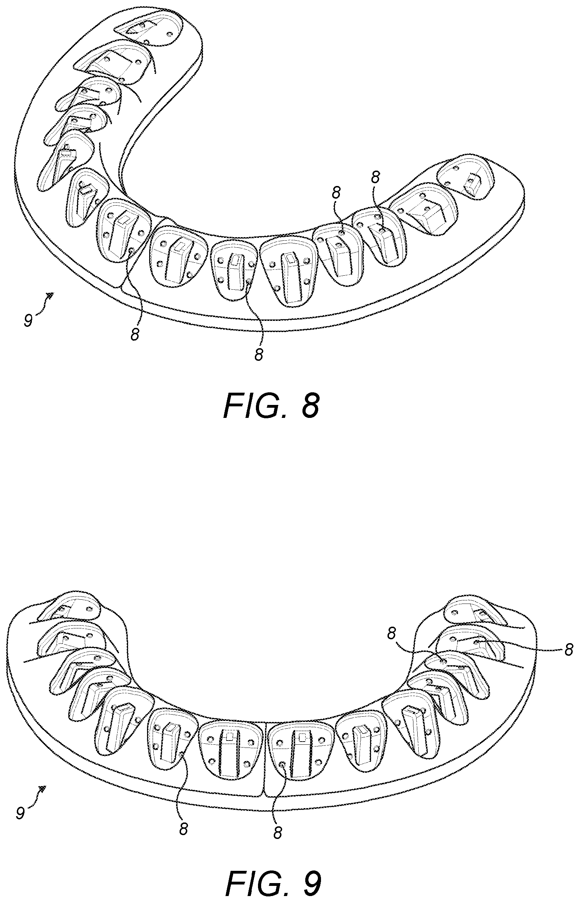

With reference to figures 7, 8 and 9, the description provides a denture base for a denture, wherein the denture base comprises a space having a surface for receiving a tooth, wherein a plurality of projections (8) extend from the surface for spacing the surface adjacent to the projections (8) from a tooth.

The plurality of projections (8) each extend 120µm from the surface of the denture base.

Preferably, each projection (8) has a base adjoining the surface of the denture base and the base of the projection (8) has an area of 0.2mm² to 6mm².

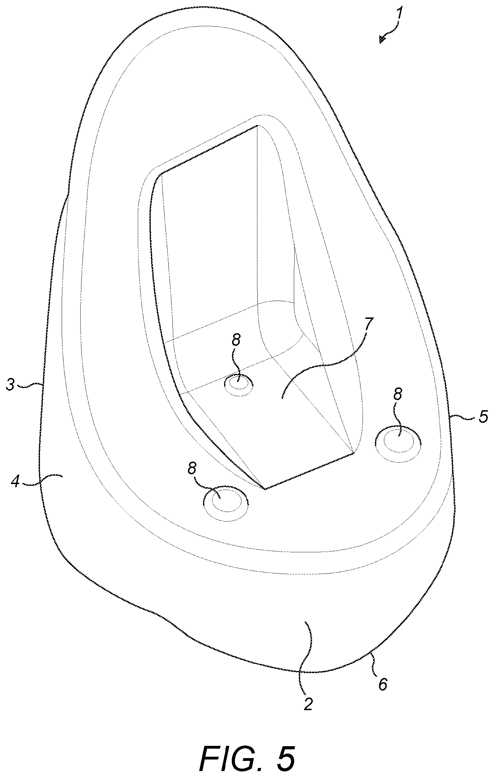

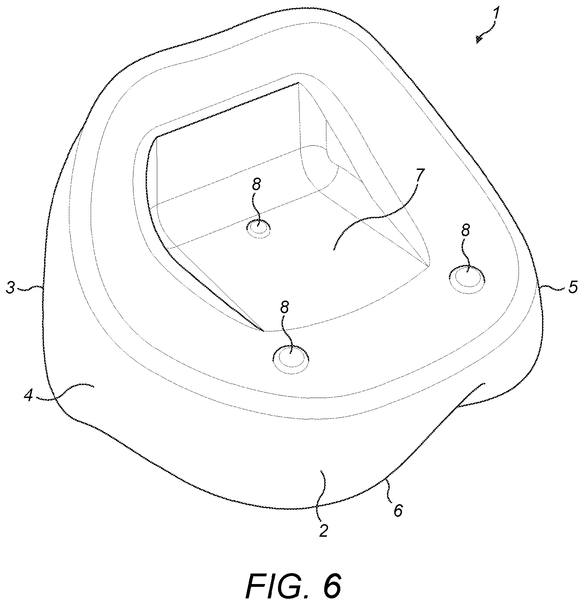

Each projection (8) is spaced apart from adjacent projections (8) so that, in use, the surface of the denture base adjacent to the projections is evenly spaced from the surface of a tooth. Advantageously the projections (8) facilitate precise positioning of the teeth (1) on the denture base because the projections (8) form stops separating the surface of the teeth (1) from the denture base (9). The back teeth (1) shown in Figure 5 or Figure 6 demonstrate how the projections (8) form a tripod which distances the surface of the tooth adjacent the tripod from a denture base (9). The front teeth (1) shown in Figures 1 to 4 demonstrate how when there are five projections (8) these can provide five feet to give precise positioning not just in a vertical dimension but also in a horizontal dimension as well. Without this novel invention the surface of the teeth themselves must rest in the adhesive layer between teeth (1) and denture base (9) and the teeth may tilt depending on where pressure is applied when inserting the teeth (1) into the denture base (9).

When the projections (8) extend from the denture base (9) as shown in Figures 7, 8 and 9 the same precise positioning of the teeth (1) into the denture base (9) is obtained.

The denture base is manufactured by a method which comprises the step of moulding a denture base having a surface for receiving a tooth and at least one projection extending from the surface for spacing the surface adjacent to the projection from the tooth. Alternatively, the method comprises the steps of milling a denture base so that it has a surface and at least one projection extending from the surface for spacing the surface adjacent to the projection from a tooth. Alternatively, the method comprises the steps of three dimensional printing a denture base having a surface for receiving a tooth and at least one projection extending from the surface for spacing the surface adjacent to the projection from the tooth.

### EXAMPLES

### Example 1

Experimental tests have been carried out to demonstrate that a bond between a denture base and a tooth of the invention is stronger compared to the bond between a denture base and a known tooth.

The experimental tests were based on the current ISO standard for denture base teeth (ISO 22112:2017). According to this standard, bonding of polymer teeth to denture base polymers is tested as follows.

Six maxillary anterior teeth from at least two different moulds are taken. The teeth are mounted on a metal former with dental mounting wax, so that about one half of the lingual surface of the incisal portion of the teeth and about one half of the teeth projects beyond the metal former. A denture flask is used to set the mounted teeth in dental gypsum. The metal mount is removed and then the wax is flushed from the teeth with boiling tap water.

The denture base polymer is processed to the teeth. In this regard, after proper plasticity has been reached, the clamped flask is submerged in water at 70°C ± 3°C in a water bath for 90 ± 1 minutes and finally immersed in boiling water in the water bath for 30 ± 1 minutes. When this heating procedure has been completed, the denture flask is cooled in the clamp in air until room temperature 23°C ± 2 °C is reached.

The plastics mounted teeth are tested in a tensile testing apparatus designed to permit a direct pull on the incisal part of the lingual surface in a labial direction at a consistent height above the denture base polymer bar. Equipment that does not permit lateral deflection or change of position is used. Each tooth is loaded at a displacement rate in the range of 0.5 mm/min to 10 mm/rnin, until fracture occurs.

The bond between the teeth and the denture base passes the test if the mode of fracture is cohesive within the tooth or the denture base polymer, i.e. there are remnants of tooth remaining bonded to the denture base polymer or there are remnants of denture base polymer remaining bonded to the tooth.

Only pure adhesive interfacial fracture indicates a failure to pass the test.

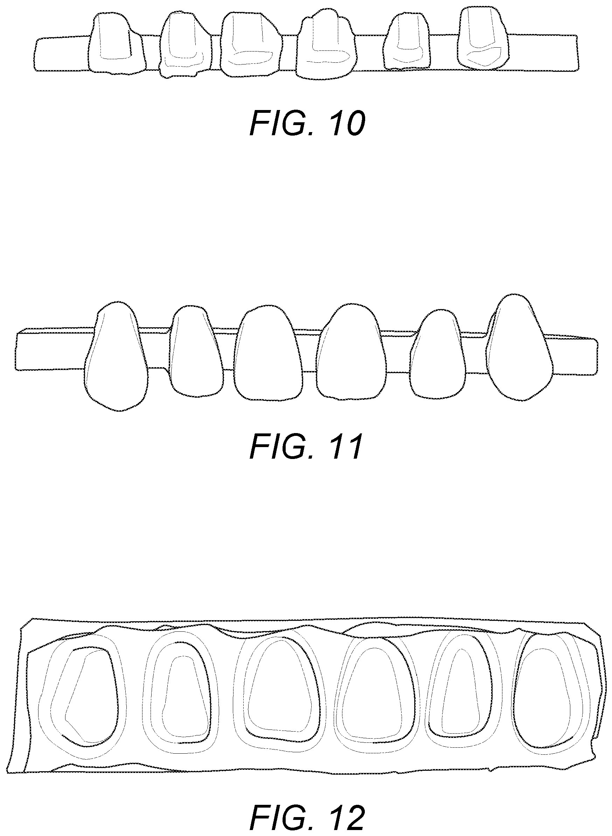

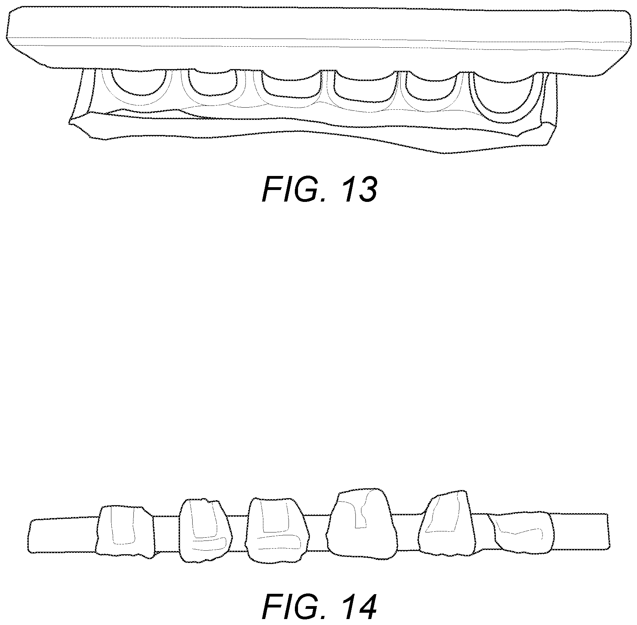

However this standard test procedure replicates the method of processing teeth to denture base that was current at the time when the standard was written. Unlike in this older process the denture base will have already been produced either by milling or 3D printing and so the teeth will not be able to be mounted into wax and processed with the base as described in the standard. The following modification to the test method in the standard was therefore used in this test.
1 A cuboid having size 14mm x 77mm x 5 mm is formed in wax.
2 Prosthetic teeth without projections were coated with wax separating solution. The wax on one of the sides with dimensions 77mm x 5mm was then softened and the teeth were pressed into this side so that an outline of the surfaces of six upper anterior teeth having no projections was obtained (as shown in Figure 10). The teeth were then carefully removed and processing of the denture base was carried out as described in the ISO standard except that Pegasus Pourable Acrylic, a self-curing PMMA acrylic was used and cured according to its instructions for use.
3 Once the tooth mount containing the denture base analogue had been cured, three teeth having no projections were placed onto one half of the denture base analogue and three teeth having projections were placed on the other half (as shown in Figure 11). The teeth were held in position with wax that was applied outside the bonding surface.
4 A matrix of the vestibular surfaces of six upper anterior teeth was formed (as shown in Figure 12) using light and putty silicone impression materials and the teeth and analogue denture base were removed. The teeth were separated from the base and steam cleaned to remove any wax residue.
5 The palatal surfaces of the teeth were cleaned with denture base monomer and replaced to their previous positions in the matrix. At the same time the bonding surfaces of the denture base analogue were also cleaned with denture base monomer.
6 A thin layer of Pegasus pourable Acrylic was then applied to all bonding surfaces and the denture base analogue was pressed onto the teeth till initial set had taken place (as shown in Figure 13). Once initial set had taken place the pressure was removed and the ensemble was placed in a hydroflask and cured for 10 minutes at 40⁰C and 2-3 bar pressure.
7 Once curing was completed, testing was carried out in accordance with the above ISO standard.
8 The comparative experimental tests showed that teeth according to the invention and having projections were extensively broken within the teeth themselves whereas teeth outside the scope of the invention and having no projections broke away from the denture base at the bonding surfaces themselves (as shown in Figure 14). This clearly demonstrated a superior bond was achieved between a denture base and teeth having projections compared to the denture base and teeth having no projections.

### Example 2

Comparative experimental tests were carried out to determine the technical effect of including projections extending from a surface of a tooth in order to provide precise positioning of the tooth on the denture base. In this regard, testing was carried out to compare an embodiment of the invention, wherein projections were included between a tooth and a denture base for providing a precise positioning on the denture base to an embodiment outside the scope of the invention having no projections extending from a tooth or denture base.

Upper and lower dentures were designed by means of design software together with teeth manufactured with an embodiment of the invention so that the teeth were ideally positioned both within each of the upper and lower dentures and relative to the teeth in the opposing denture so that both dentures were in perfect articulation and all teeth were correctly positioned on the bases.

A further set of upper and lower dentures were designed in exactly the same way but with teeth outside of the embodiment of the invention and having no projections.

In all cases space was left for the required thickness of cement to be applied. It was postulated that because of the projections extended from the surfaces that those teeth manufactured with the embodiment of the invention would be more precisely positioned on the base. The two sets of upper and lower denture bases were 3D printed but not post cured.

All tooth surfaces to come into contact with the denture base were sandblasted with 50µm aluminium oxide at 1 bar. Residues from the abrasive were removed using steam cleaning. In order to aid adhesion a thin layer of primer was then applied to the above surfaces using a microbrush and then cured. A thin layer of adhesive was then applied with a microbrush to the tooth spaces in the denture bases. The teeth were then inserted into the denture bases and pressed home so that excess cement was extruded from the margins and was then carefully removed with a microbrush. The cement was then cured together with the post cure of the 3D printed base.

Once curing was completed, a comparison was carried out.

The comparative experimental tests showed that teeth according to embodiments of the invention and having projections extending from the teeth for spacing the surface of the teeth adjacent to the projections from the surface of the denture base were in their correct orientations and precisely aligned. This enabled upper and lower teeth to be aligned correctly with respect to each other. In contrast, teeth outside the scope of the invention and having no projections were aligned less precisely and not in the exactly correct orientation. This resulted in upper and lower teeth being aligned incorrectly with respect to each other.

The scope of the invention is defined by the wording of the appended claims.

## Claims

1. A prosthetic tooth (1) for a denture, wherein the tooth (1) comprises a lingual or palatal surface (2), an opposing vestibular surface (3), opposing proximal surfaces (4, 5), an incisal or occlusal surface (6) and an opposing apical surface (7), wherein two, three or four projections (8) extend from the apical and /or the palatal or lingual surface of the tooth for spacing the surface (2, 7) adjacent to the projection from a denture base, wherein each projection (8) extends 40µm to 500µm from the surface of the tooth.

2. A prosthetic tooth (1) according to claim 1, wherein each projection (8) extends 100µm to 200µm from the surface (2, 7); optionally wherein each projection (8) extends 120µm from the surface (2, 7).

3. A prosthetic tooth (1) according to any one of the preceding claims, wherein each projection (8) has a base adjoining the surface of a tooth (1) and the base of the projection (8) has an area of 0.2mm² to 6mm².

4. A prosthetic tooth (1) according to any one of the preceding claims, wherein one or more projections (8) are semi spherical, frusto spherical or are defined by the shape of a dome or spherical segment.

5. A prosthetic tooth (1) according to any one of claims 1 to 3, wherein one or more projections (8) are cylindrical.

6. A prosthetic tooth (1) according to claim 5, wherein the end of the projection distant from the base of the projection (8) is semi spherical, frusto spherical or is defined by the shape of a dome or spherical segment.

7. A prosthetic tooth (1) according to any one of claims 1 to 3, wherein one or more projections (8) are cuboid, or defined by a square or rectangular frusto pyramid.

8. A prosthetic tooth (1) according to any one of claims 1 to 3, wherein a plurality of projections (8) having the same or different three dimensional shapes is provided.

9. A prosthetic tooth (1) according to claim 8, wherein each projection (8) is spaced apart from adjacent projections (8) so that, in use, adjacent to the projections (8), the surface of the tooth (1) is uniformly or evenly spaced from the surface of a denture base.

10. A set of teeth (1) comprising a plurality of teeth (1) according to any one of claims 1 to 9.

11. The set of teeth (1) according to claim 10, wherein the set of teeth (1) comprises one or more upper (maxillary) and / or lower (mandibular) teeth.

12. The set of teeth (1) according to claim 10 or 11, wherein the set of teeth (1) comprises one or more of central, lateral, cuspid, first bicuspid, second bicuspid, first molar and second molar teeth.

13. A denture comprising a prosthetic tooth (1) of any one of claims 1 to 9.

14. A method for manufacturing a tooth (1) of any one of claims 1 to 9, which comprises the step of moulding a tooth (1) having at least one projection (8) extending from the surface of the tooth (1); or milling a tooth (1) so that at least one projection (8) extends from the surface of the tooth (1); or three dimensional printing a tooth (1) having at least one projection (8) extending from the surface of the tooth (1).

15. A method for correctly positioning and bonding teeth (1) in a denture which comprises (a) providing one or more teeth (1) of any one of claims 1 to 9 and a denture base (9) and bonding the teeth (1) with the denture base (9).

## Patentansprüche

1. Prothetischer Zahn (1) für eine Zahnprothese, worin der Zahn (1) eine linguale oder palatinale Fläche (2), eine abgewandte vestibuläre Fläche (3), abgewandte proximale Flächen (4, 5), eine Inzisal- oder Okklusalfläche (6) und eine abgewandte apikale Fläche (7) aufweist, worin sich zwei, drei oder vier Vorsprünge (8) von der apikalen und/oder der palatinalen oder lingualen Oberfläche des Zahns erstrecken, um die an den Vorsprung angrenzende Oberfläche (2, 7) von einer Prothesenbasis zu beabstanden, worin sich jeder Vorsprung (8) 40 µm bis 500 µm von der Oberfläche des Zahns erstreckt.

2. Prothetischer Zahn (1) nach Anspruch 1, worin sich jeder Vorsprung (8) 100 µm bis 200 µm von der Oberfläche (2, 7) erstreckt; wahlweise worin sich jeder Vorsprung (8) 120 µm von der Oberfläche (2, 7) erstreckt.

3. Prothetischer Zahn (1) nach einem der vorhergehenden Ansprüche, worin jeder Vorsprung (8) eine an die Oberfläche eines Zahns (1) angrenzende Basis aufweist und die Basis des Vorsprungs (8) eine Fläche von 0,2 mm² bis 6 mm² aufweist.

4. Prothetischer Zahn (1) nach einem der vorhergehenden Ansprüche, worin ein oder mehrere Vorsprünge (8) halbkugelförmig oder kegelstumpfförmig sind oder durch die Form einer Kuppel oder eines Kugelsegments definiert sind.

5. Prothetischer Zahn (1) nach einem der Ansprüche 1 bis 3, worin ein oder mehrere Vorsprünge (8) zylindrisch sind.

6. Prothetischer Zahn (1) nach Anspruch 5, worin das von der Basis des Vorsprungs (8) entfernte Ende des Vorsprungs halbkugelförmig, kegelstumpfförmig oder durch die Form einer Kuppel oder eines Kugelsegments definiert ist.

7. Prothetischer Zahn (1) nach einem der Ansprüche 1 bis 3, worin ein oder mehrere Vorsprünge (8) quaderförmig sind oder durch einen quadratischen oder rechteckigen Pyramidenstumpf definiert sind.

8. Prothetischer Zahn (1) nach einem der Ansprüche 1 bis 3, worin mehrere Vorsprünge (8) mit gleichen oder unterschiedlichen dreidimensionalen Formen vorgesehen ist.

9. Prothetischer Zahn (1) nach Anspruch 8, worin jeder Vorsprung (8) von benachbarten Vorsprüngen (8) beabstandet ist, so dass bei der Verwendung die Oberfläche des Zahns (1) angrenzend an die Vorsprünge (8) einheitlich oder gleichmäßig von der Oberfläche einer Prothesenbasis beabstandet ist.

10. Gebiss (1) mit mehreren Zähnen (1) nach einem der Ansprüche 1 bis 9.

11. Gebiss (1) nach Anspruch 10, worin das Gebiss (1) einen oder mehrere obere (Oberkiefer-) und/oder untere (Unterkiefer-) Zähne umfasst.

12. Gebiss (1) nach Anspruch 10 oder 11, worin das Gebiss (1) einen oder mehrere zentrale Zähne, laterale Zähne, Eckzähne, erste Prämolaren, zweite Prämolaren, erste Molaren und zweite Molaren umfasst.

13. Zahnprothese mit einem prothetischen Zahn (1) nach einem der Ansprüche 1 bis 9.

14. Verfahren zur Herstellung eines Zahns (1) nach einem der Ansprüche 1 bis 9, das den Schritt des Formens eines Zahns (1) mit mindestens einem Vorsprung (8), der sich von der Oberfläche des Zahns (1) erstreckt, oder des Fräsens eines Zahns (1), so dass sich mindestens ein Vorsprung (8) von der Oberfläche des Zahns (1) erstreckt, oder des dreidimensionalen Druckens eines Zahns (1) mit mindestens einem Vorsprung (8) umfasst, der sich von der Oberfläche des Zahns (1) erstreckt.

15. Verfahren zum korrekten Anordnen und Verbinden von Zähnen (1) in einer Prothese, welches (a) das Bereitstellen eines oder mehrerer Zähne (1) nach einem der Ansprüche 1 bis 9 und einer Prothesenbasis (9) und das Verbinden der Zähne (1) mit der Prothesenbasis (9) umfasst.

## Revendications

1. Dent prothétique (1) pour une prothèse dentaire, dans laquelle la dent (1) comprend une surface linguale ou palatine (2), une surface vestibulaire opposée (3), des surfaces proximales opposées (4, 5), une surface incisive ou occlusale (6) et une surface apicale opposée (7), dans laquelle deux, trois ou quatre saillies (8) s'étendent depuis la surface apicale et/ou palatine ou linguale de la dent pour espacer la surface (2, 7) adjacente à la saillie d'une base de prothèse dentaire, dans laquelle chaque saillie (8) s'étend sur 40 µm à 500 µm à partir de la surface de la dent.

2. Dent prothétique (1) selon la revendication 1, dans laquelle chaque saillie (8) s'étend sur 100 µm à 200 µm à partir de la surface (2, 7) ; facultativement dans laquelle chaque saillie (8) s'étend sur 120 µm à partir de la surface (2, 7).

3. Dent prothétique (1) selon l'une quelconque des revendications précédentes, dans laquelle chaque saillie (8) présente une base adjacente à la surface d'une dent (1) et la base de la saillie (8) présente une zone de 0,2 mm² à 6 mm².

4. Dent prothétique (1) selon l'une quelconque des revendications précédentes, dans laquelle une ou plusieurs saillies (8) sont semi-sphériques, tronco-sphériques ou sont définies par la forme d'un dôme ou d'un segment sphérique.

5. Dent prothétique (1) selon l'une quelconque des revendications 1 à 3, dans laquelle une ou plusieurs saillies (8) sont cylindriques.

6. Dent prothétique (1) selon la revendication 5, dans laquelle l'extrémité de la saillie distante de la base de la saillie (8) est semi-sphérique, tronco-sphérique ou est définie par la forme d'un dôme ou d'un segment sphérique.

7. Dent prothétique (1) selon l'une quelconque des revendications 1 à 3, dans laquelle une ou plusieurs saillies (8) sont cubiques, ou définies par un tronc de pyramide carré ou rectangulaire.

8. Dent prothétique (1) selon l'une quelconque des revendications 1 à 3, dans laquelle une pluralité de saillies (8) présentant trois formes tridimensionnelles identiques ou différentes est fournie.

9. Dent prothétique (1) selon la revendication 8, dans laquelle chaque saillie (8) est espacée de saillies adjacentes (8) de sorte que, lors de l'utilisation, adjacente aux saillies (8), la surface de la dent (1) soit uniformément ou également espacée de la surface d'une base de prothèse dentaire.

10. Ensemble de dents (1) comprenant une pluralité de dents (1) selon l'une quelconque des revendications 1 à 9.

11. Ensemble de dents (1) selon la revendication 10, dans lequel l'ensemble de dents (1) comprend une ou plusieurs dents supérieures (maxillaires) et/ou inférieures (mandibulaires).

12. Ensemble de dents (1) selon la revendication 10 ou 11, dans lequel l'ensemble de dents (1) comprend une ou plusieurs parmi les dents centrales, latérales, canines, la première canine, la deuxième canine, la première molaire et la deuxième molaire.

13. Prothèse dentaire comprenant une dent prothétique (1) selon l'une quelconque des revendications 1 à 9.

14. Procédé de fabrication d'une dent (1) selon l'une quelconque des revendications 1 à 9, qui comprend l'étape de moulage d'une dent (1) présentant au moins une saillie (8) s'étendant à partir de la surface de la dent (1) ; ou de fraisage d'une dent (1) de sorte qu'au moins une saillie (8) s'étende à partir de la surface de la dent (1) ; ou d'impression tridimensionnelle d'une dent (1) présentant au moins une saillie (8) s'étendant à partir de la surface de la dent (1).

15. Procédé de positionnement et de collage corrects des dents (1) dans une prothèse dentaire qui comprend (a) la fourniture d'une ou de plusieurs dents (1) selon l'une quelconque des revendications 1 à 9 et d'une base de prothèse dentaire (9) et le collage des dents (1) avec la base de prothèse dentaire (9).
